# EUROPEAN PATENT APPLICATION

(11) **EP 2 128 312 A1**
(43) Date of publication of application: **02.12.2009**
(21) Application number: 08721106.6
(22) Date of filing: 29.02.2008
(51) Int. Cl.: D01F 9/08, B01J 23/44, B01J 35/10, B01J 37/08, C03C 13/00, C03C 13/02, D06M 10/06

(54) **SILICA-BASED COMPOSITE OXIDE FIBER, CATALYST FIBER COMPRISING THE SAME, AND PROCESS FOR PRODUCING THE SAME**

(30) Priority: 19.03.2007 JP 2007071061
(71) Applicant: Ube Industries, Ltd., Ube-shi Yamaguchi 755-8633 (JP)
(72) Inventor: YAMAOKA, Hiroyuki, Ube-shi Yamaguchi 755-8633 (JP); MATSUNAGA, Tadashi, Ube-shi Yamaguchi 755-8633 (JP); HARADA, Yoshikatsu, Ube-shi Yamaguchi 755-8633 (JP); FUJII, Teruaki, Ube-shi Yamaguchi 755-8633 (JP); OTANI, Shinichirou, Ube-shi Yamaguchi 755-8633 (JP)
(74) Representative: Grünecker, Kinkeldey, Stockmair & Schwanhäusser Anwaltssozietät
(86) International application number: PCT/JP2008/053686
(87) International publication number: WO 2008/114597

(57) **Abstract**

An object is to provide a silica-based composite oxide fiber which is a continuous fiber high in strength and has, in the fiber surface thereof, mesopores each having an appropriate size, and to provide a catalyst fiber, containing the silica-based composite oxide fiber, in which a noble metal catalyst can be selectively carried into its pores, whereby preventing sintering of the noble metal catalyst.

The silica-based composite oxide fiber comprises a composite oxide phase composed of an oxide phase made mainly of a silica component (first phase) and a metal oxide phase comprising one or more metals other than silica (second phase), wherein a content by percentage of at least one of metal elements of metal oxides constituting the metal oxide phase (second phase) increases with a gradient toward a surface of the fiber, and wherein the metals that constitute the metal oxide phase (second phase) are in the form of particles, and mesopores extending from the fiber surface to the inside of the fiber and having an average pore diameter of 2 to 30 nm are formed between the particles.

## Description

### Technical Field

The present invention relates to a silica-based composite oxide fiber that has excellent mechanical characteristics, and is usable as a catalyst carrier, a catalyst fiber containing the fiber, and a process for producing the fiber.

### Background Art

In the fields of catalysts, catalyst carriers, and various functional materials, attention has been paid to materials having a porous structure. It has been expected that, in particular, a mesoporous material having regularly arranged mesopores is applied to various chemical fields. According to Seiichi Kondoh et al., "Science of Adsorption" (Maruzen, 2nd edition, 2001), mesopores are defined as pores having a pore diameter of 2 to 50 nm on the basis of an international consensus. It is expected that mesoporous materials having mesopores are used as a catalyst, a catalyst carrier, an adsorbing/fixing agent, optical functions, and various sensors by modifying their pore surfaces chemically with, for example, a metal element or an organic functional group. An issue about such a mesoporous material is to control the pore diameter thereof. In particular, the enlargement of the pore diameter makes it possible to apply large molecules to chemical reaction in which pores are used as reaction sites, which has been hitherto unable to be attained. Thus, the enlargement is a practically important issue.

Regarding this issue, for example, Patent Document 1 discloses a process for producing porous silica in a fibrous form, using an alkali silicate as a silica source and a nonionic surfactant as a template, wherein the addition of a fluoride for inducing the enlargement of the pore diameter is controlled, whereby the fibrous form is kept while a mesoporous body having a pore diameter of 8 nm or more, a specific surface area of 1000 m²/g and a pore volume of 0.5 mL/g is produced, which is in a fibrous form. Patent Document 2 discloses a pitch type activated carbon fiber made into a porous structure without damaging the mechanical strength as a continuously-fibrous porous body having a high strength itself. Furthermore, Patent Document 3 discloses a catalyst produced by spraying an aqueous solution of a noble metal onto a mesoporous body and then firing the resultant.

Patent Document 4 described by the present inventors discloses a silica-based composite oxide fiber having a gradient composition having no mesopores. This silica-based composite oxide fiber is produced by subjecting a precursor fiber made of an organic silicon polymer to heat treatment and then firing the resultant in air of high temperature, and is very dense and high in strength. Patent Document 4 also discloses the following: when a low molecular weight organometallic compound, or a reaction product made from a low molecular weight organometallic compound and a low molecular weight organic silicon polymer is also present in the organic silicon polymer, low molecular weight materials including the organometallic compound component bleed out selectively into the fiber surface in the heat treatment step after the starting material is spun; and by firing the fiber in air after the heat treatment, an oxide phase originating from the low molecular weight material is effectively produced in the fiber surface.
Patent Document 1: Japanese Patent Application Laid-Open No. 2006-124204
Patent Document 2: Japanese Patent Application Laid-Open No. 6-17321
Patent Document 3: Japanese Patent Application Laid-Open No. 2006-272324
Patent Document 4: Japanese Patent No. 3465699

### Disclosure of the Invention

### Problems to be Solved by the Invention

It is mentioned that according to the method of Patent Document 1, a pore diameter of 8 nm or more can be attained in accordance with the addition condition of the fluoride; however, Patent Document 1 does not disclose any controlling method for making the pore diameter into any value. About the fibrous product produced by the method according to Patent Document 1, the length of the long axes (main axes) thereof is from 5 to 1000 µm, the aspect ratio is from 3 to 150, and the fiber length is very short. Thus, this fibrous product has a problem that the fibrous product is not easily handled without using a supporting material from the viewpoint of the scattering and the formability thereof, and others. The pitch type activated carbon fiber in Patent Document 2 is a continuously-fibrous porous body having a high strength itself. However, most of the pore diameters thereof are 0.5 nm or less. Thus, the pores are ultramicro pores. As a result, the porous body has a problem that it is difficult to apply the body to chemical reaction sites. Furthermore, about the catalyst in Patent Document 3, a noble metal catalyst is not selectively carried into the pores but a large amount thereof is carried also onto the porous body surface. Thus, the catalyst has a problem that the noble metal catalyst undergoes sintering (particle growth) in an environment, wherein the catalyst is used, so that the catalytic activity falls.

In order that a mesoporous material, of which large molecules can be applied to a chemical reaction in which mesopores are used as reaction sites, the application having been hitherto unable to be attained, can be put to practical use as a catalyst, a catalyst carrier or the like, it is required that the mesoporous material is a continuously-fibrous porous body which has a high mechanical strength itself and an appropriate mesopore structure. Furthermore, if the pore diameters thereof can be controlled arbitrarily, for example, at the time of causing a catalyst to be carried onto the porous moieties, the control is very advantageous for controlling the carried-catalyst amount and the catalyst particle diameter.

Thus, an object of the present invention is to provide a silica-based composite oxide fiber which is a continuous fiber high in strength and has, in the fiber surface thereof, mesopores each having an appropriate size. Another object of the invention is to provide a catalyst fiber, containing the silica-based composite oxide fiber, in which a noble metal catalyst can be selectively carried into its pores, whereby the sintering of the noble metal catalyst can be prevented.

### Means for Solving the Problems

In order to attain the objects, the inventors have repeatedly made eager researches to find out that the silica-based composite oxide fiber according to Patent Document 4 is further treated, whereby mesopores each having an appropriate size can be formed in the surface of the fiber. Thus, the invention has been made. Specifically, the invention is a silica-based composite oxide fiber including a composite oxide phase composed of an oxide phase made mainly of a silica component (first phase), and a metal oxide phase including one or more metals other than silica (second phase). The content by percentage of at least one of the metal elements of metal oxides constituting the metal oxide phase (second phase) increases with a gradient toward the surface of the fiber, the metals that constitute the metal oxide phase (second phase) are in the form of particles, and mesopores extending from the fiber surface to the inside of the fiber and having an average pore diameter of 2 to 30 nm are formed between the particles.

It is desired in the silica-based composite oxide fiber according to the invention that the content by percentage of the oxide phase (first phase) in the whole of the fiber is from 98 to 40% by weight, and the content by percentage of the metal oxide phase (second phase) is from 2 to 60% by weight.

It is desired that the gradient of the content by percentage of at least one of the metal elements of the metal oxides constituting the metal oxide phase (second phase) is present from the fiber surface to a depth of 500 nm. It is also desired that the crystal particle diameter of the metal oxides constituting the metal oxide phase (second phase) is 30 nm or less.

It is also desired that the metal oxides constituting the metal oxide phase (second phase) are one or more oxides or one or more composite oxides selected from titanium (Ti), vanadium (V), chromium (Cr), manganese (Mn), cobalt (Co), copper (Cu), zinc (Zn), barium (Ba), strontium (Sr), cadmium (Cd), lead (Pb), iron (Fe), nickel (Ni), aluminum (Al), gallium (Ga), germanium (Ge), indium (In), tin (Sn), zirconium (Zr), and tungsten (W).

The silica-based composite oxide fiber according to the invention is produced by a production process including a first step of melting a modified polycarbosilane having a structure in which a polycarbosilane having a number-average molecular weight of 200 to 10,000 and having a main chain skeleton mainly represented by a general formula [3] illustrated below is modified with an organometallic compound, or melting a mixture of the modified polycarbosilane and an organometallic compound, thereby yielding a dope, a second step of yielding a spun fiber from the dope, a third step of subjecting the spun fiber to heat treatment in an oxidizing atmosphere, thereby yielding an cured fiber, a fourth step of firing the cured fiber in an oxidizing atmosphere, thereby yielding a silica-based composite oxide fiber, and a fifth step of subjecting the silica-based composite oxide fiber to surface treatment, thereby removing the silica near the surface thereof.

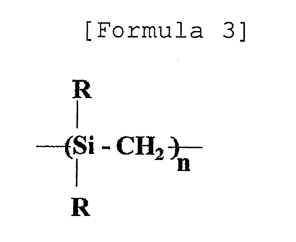

In the formula, R is a hydrogen atom, a lower alkyl group, or a phenyl group.

The catalyst fiber according to the invention includes: the above-mentioned silica-based composite oxide fiber; and at least one metal selected from platinum (Pt), palladium (Pd), ruthenium (Ru), rhodium (Rh), gold (Au), silver (Ag), copper (Cu), iron (Fe), nickel (Ni), zinc (Zn), gallium (Ga), germanium (Ge), indium (In) and tin (Sn) and carried in mesopores in the silica-based composite oxide fiber.

The catalyst fiber according to the invention is produced by a production process including a first step of melting a modified polycarbosilane having a structure in which a polycarbosilane having a number-average molecular weight of 200 to 10,000 and having a main chain skeleton mainly represented by a general formula [4] illustrated below is modified with an organometallic compound, or melting a mixture of the modified polycarbosilane and an organometallic compound, thereby yielding a dope, a second step of yielding a spun fiber from the dope, a third step of subjecting the spun fiber to heat treatment in an oxidizing atmosphere, thereby yielding an cured fiber, a fourth step of firing the cured fiber in an oxidizing atmosphere, thereby yielding a silica-based composite oxide fiber, a fifth step of subjecting the silica-based composite oxide fiber to surface treatment, thereby removing the silica near the surface thereof, and a sixth step of causing at least one metal selected from platinum (Pt), palladium (Pd), ruthenium (Ru), rhodium (Rh), gold (Au), silver (Ag), copper (Cu), iron (Fe), nickel (Ni), zinc (Zn), gallium (Ga), germanium (Ge), indium (In) and tin (Sn) to be carried onto the silica-based composite oxide fiber. It is desired that in the sixth step, the silica-based composite oxide fiber is brought into contact with a solution containing the metal while light is radiated thereto, thereby causing the metal to be carried into mesopores in the surface of the fiber.

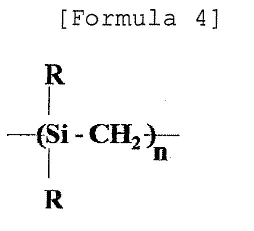

In the formula, R is a hydrogen atom, a lower alkyl group, or a phenyl group.

### Effect of the Invention

As described above, according to the invention, a silica-based composite oxide fiber can be provided which is a continuous fiber high in strength and has, in the fiber surface thereof, mesopores having an appropriate size. Furthermore, a catalyst fiber containing the silica-based composite oxide fiber can be provided in which a noble metal catalyst is selectively carried into its mesopores, whereby the sintering of the noble metal catalyst can be prevented.

### Brief Description of the Drawings

FIG. 1 is a view schematically illustrating a silica-based composite oxide fiber according to the invention.
FIG. 2 is a TEM photograph of a titania/silica fiber yielded in Experiment Example 1.
FIG. 3 is a TEM photograph of a carrying titania/silica fiber yielded in Example 1.

### Best Mode for Carrying Out the Invention

The silica-based composite oxide fiber according to the invention is a fiber having, in its fiber surface, mesopores of an appropriate size that are formed by further treating the silica-based composite oxide fiber according to Patent Document 4. In the production of the silica-based composite oxide fiber according to Patent Document 4, the process of using an organic silicon polymer as a starting material to produce silica includes an oxidizing step of converting silicon-carbon bonds to silicon-oxygen bonds. It is expected that in this step, the volume increases about 1.37 times. This change is attained at a relatively low temperature of 600°C or higher. It therefore appears that a dense silica-composite fiber is effectively obtained by firing and a high strength as described above can be attained.

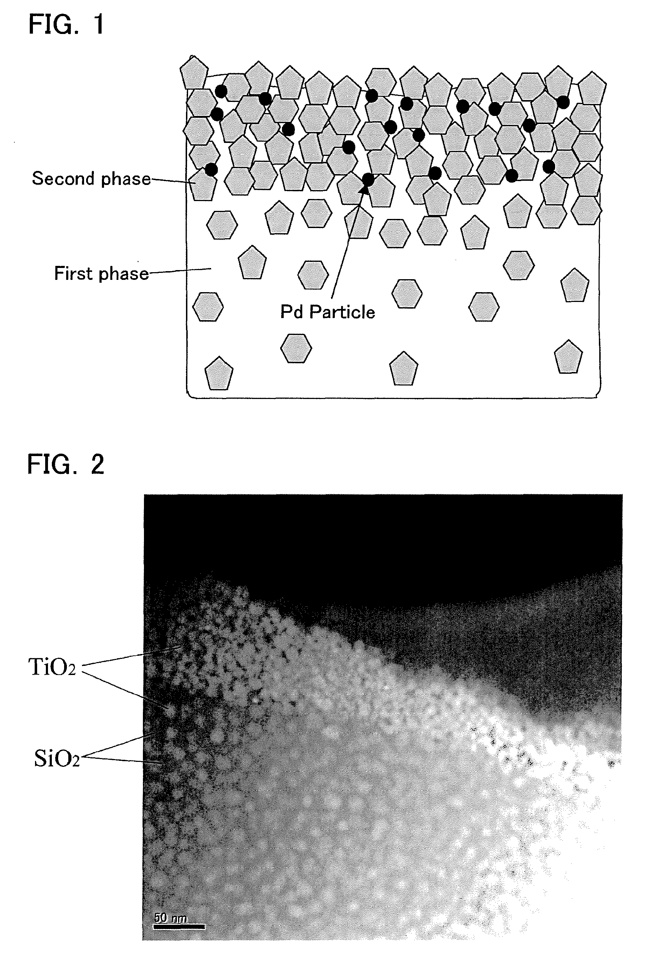

Specifically, the silica-based composite oxide fiber according to Patent Document 4 is a fiber made of a composite oxide phase composed of an oxide phase made mainly of a silica component (first phase) and a metal oxide phase (second phase), wherein the content by percentage of the constituting components of the second phase increases with a gradient toward the surface of the fiber. The inventors have found out that this silica-based composite oxide fiber is subjected to surface treatment to remove the silica component near the fiber surface, whereby mesopores can be formed between particles of the second phase which remain near the fiber surface, and that the size of the mesopores can be controlled in accordance with the particle size of the second phase. The inventors have further found out that a catalyst such as a noble metal can be selectively carried only into the mesopores by optical electrodeposition. As schematically illustrated in FIG. 1, in the silica-based composite oxide fiber according to the invention, the content by percentage of the metals which constitute the second phase increases with a gradient toward the fiber surface. The metals that constitute the second phase are formed in the form of particles. In FIG. 1, palladium (Pd) is carried in mesopores formed between the particles of the second phase, whereby the catalyst fiber according to the invention is structured.

In the invention, the oxide phase (first phase), which is made mainly of a silica component, may be either amorphous or crystalline. The first phase may contain a metal element or metal oxide which can be combined with silica to produce a solid solution or an eutectic point compound. A metal element (A), which can be combined with silica to produce a solid solution, and a metal element (B) the oxide of which can be combined with silica to produce a compound having a specific composition are not particularly limited. The element (A) is, for example, titanium, and examples of the element (B) include aluminum, zirconium, yttrium, lithium, sodium, barium, calcium, boron, zinc, nickel, manganese, magnesium, and iron.

The oxide phase (first phase) forms a fiber internal phase in the silica-based composite oxide fiber according to the invention, and fulfils an important function of taking charge of mechanical characteristics. The content by percentage of the first phase in the whole of the fiber is preferably from 98 to 40% by weight. In order to form mesopores effectively in the fiber surface and further cause high mechanical characteristics to be expressed, it is preferred to control the content by percentage of the first phase into the range of 95 to 50% by weight.

The metal oxide constituting the metal oxide phase (second phase) fulfils an important function of forming mesopores in the surface layer of the fiber. The content by percentage of the second phase constituting the surface layer region of the fiber is preferably from 2 to 60% by weight. In order to cause the advantageous effect thereof to be sufficiently exhibited and also cause high strength to be expressed, it is preferred to control the content by percentage into the range of 5 to 50% by weight.

The metal oxide constituting the metal oxide phase (second phase) needs to be a semiconductor material that is excited when the material is irradiated with light having a wavelength corresponding to the band gap thereof, thereby forming electron-hole pairs. The metal oxide is one or more oxides or one or more composite oxides selected from titanium (Ti), vanadium (V), chromium (Cr), manganese (Mn), cobalt (Co), copper (Cu), zinc (Zn), barium (Ba), strontium (Sr), cadmium (Cd), lead (Pb), iron (Fe), nickel (Ni), aluminum (Al), gallium (Ga), germanium (Ge), indium (In), tin (Sn), zirconium (Zr), and tungsten (W). Of these oxides, titania, barium titanate, strontium titanate, zirconia and the like are preferably used. When light having a wavelength corresponding to the band gap of the metal oxide of the second phase is radiated to the silica-based composite oxide fiber according to the invention in an aqueous solution of a noble metal, the metal oxide of the second phase is excited to form electron-hole pairs. At this time, holes and electrons are generated on the light-radiated side of the metal oxide and on the non-light-radiated side thereof (i.e., in the mesopores), respectively. The electrons cause ions of the noble metal in the aqueous solution to be reduced, so that the noble metal is precipitated; thus, the noble metal is selectively carried in the mesopores. In the silica-based composite oxide fiber according to the invention, the size of the mesopores is controlled in accordance with the particle size of the metal oxide constituting the second phase; therefore, the size thereof is important. In order to use the silica-based composite oxide fiber as a catalyst and a catalyst carrier in which mesopores are used as chemical reaction sites, it is desired that the average pore diameter is from 2 to 30 nm, preferably from 5 to 20 nm. If the diameter is smaller than this range, it is difficult to form mesopores usable as reaction sites for a large molecular size. If the diameter is larger, on the other hand, it unfavorably becomes difficult to adjust the amount and particle size of the catalyst at the time of carrying a catalyst into the mesopores. In other words, in the silica-based composite oxide fiber according to the invention, the size of catalyst particles to be carried is restricted by the mesopore diameter; however, if the mesopore diameter is too large, the catalyst particle size becomes larger than a needed size so as to cause an inconvenience that the catalyst amount becomes larger than a needed amount.

In the silica-based composite oxide fiber according to the invention, the gradient of the content by percentage of at least one of the metal elements of the metal oxides constituting the metal oxide phase (second phase) is present preferably from the fiber surface to a depth of 500 nm.

The silica-based composite oxide fiber according to the invention is produced preferably through a first step to a fifth step described below. The catalyst fiber according to the invention is produced preferably through the first step to a sixth step described below.

### First step

In the first step, produced is a modified polycarbosilane having a number-average molecular weight of 1,000 to 50,000, which is to be used as a starting material of the silica-based composite oxide fiber. The process for producing this modified polycarbosilane is similar to the process described in Japanese Patent Application Laid-Open No. 56-74126; however, in the invention, it is necessary to control the bonding state of functional groups thereof carefully.

The polycarbosilane, which is the starting material, is derived from an organometallic compound having the following as a basic structure thereof: a polycarbosilane having a main chain skeleton mainly represented by a general formula [5] and having a number-average molecular weight of 200 to 10,000; and a general formula M(OR')n or MR"m wherein M represents a metal element, R' represents an alkyl group having 1 to 20 carbon atoms, or a phenyl group, R" represents acetylacetonate, and m and n each represent an integer more than 1.

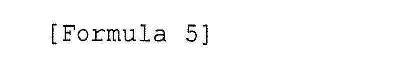

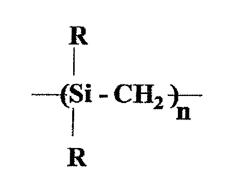

In the formula, R represents a hydrogen atom, a lower alkyl group, or a phenyl group.

In order to produce the silica-based composite oxide fiber of the invention, which has a gradient composition, it is necessary to select a mild reaction condition permitting only a part of the organometallic compound to be bonded to the polycarbosilane. For this purpose, it is necessary to cause the components to react with each other in an inert gas at a temperature of 280°C or lower, preferably 250°C or lower. Even when the organometallic compound reacts with the polycarbosilane under this reaction condition, they are bonded to each other into a monofunctional polymer form (that is, in a pendant form) so that the molecular weight does not increase largely. This modified polycarbosilane, to which the organometallic compound is partially bonded, fulfils an important function of improving the compatibility between the polycarbosilane and the organometallic compound.

When many functional groups, i.e., two or more groups are bonded thereto, a bridging structure of the polycarbosilane is formed and further a remarkable increase in the molecular weight is recognized. In this case, a sudden and intense generation of heat and a rise in the melt viscosity are caused. On the other hand, when only one functional group reacts as described above so that an unreacted portion of the organometallic compound remains, reversely, a decline in the melt viscosity is observed.

In the production of the silica-based composite oxide fiber according to the invention, it is desired to select conditions for causing the unreacted portion of the organometallic compound to remain intentionally. In the invention, the following materials, which coexist, are mainly used as the starting material: the above-mentioned modified polycarbosilane; and the organometallic compound in an unreacted state, or a dimer, a trimer of the organometallic compound. However, the modified polycarbosilane may be used alone as the starting material in the same manner when the modified polycarbosilane contains a modified polycarbosilane component having a very low molecular weight.

The modified polycarbosilane yielded as described above, or the mixture of the modified polycarbosilane and the low molecular weight organometallic compound is melted, thereby preparing a dope. If necessary, the dope is filtrated to remove materials harmful at the time of spinning, such as micro gel and impurities.

### Second step

In the second step, an ordinary synthetic fiber spinning machine is used to spin the dope yielded in the first step, thereby yielding a spun fiber. The temperature of the dope in the spinning is varied in accordance with a softening temperature of the starting-material modified polycarbosilane. The temperature is preferably in the range of 50 to 200°C. If necessary, in the spinning machine, the lower region of its nozzle may be provided with a humidifying and heating cylinder. The fiber diameter of the resultant spun fiber is adjusted by changing the jet-out amount from the nozzle, and a winding speed of a high-speed winder installed at the lower region of the spinning machine. The fiber may be shaped directly into a felt form, without winding the fiber jetted out from the nozzle, by a melt-blowing process or a spun-bonding process.

Besides the above-mentioned melt spinning process, the spun fiber may be yielded by a dry spinning process. Specifically, the modified polycarbosilane, or the mixture of the modified polycarbosilane and the low molecular weight organometallic compound, which is yielded in the first step, is dissolved into a solvent in which the modified polycarbosilane and the low molecular weight organometallic compound can be dissolved, such as benzene, toluene or xylene, to prepare a dope, and then an ordinary used synthetic fiber spinning machine is used to spin this dope by a dry spinning process. If necessary, in the same manner as in the case of the melt spinning process, the dope is filtrated to remove materials harmful at the time of spinning, such as micro gel and impurities, and further the fiber diameter of the resultant spun fiber is adjusted by changing the winding speed of the winder.

If necessary, in the second step, a spinning cylinder is fitted to the spinning machine to render the atmosphere in the spinning cylinder a mixed atmosphere in which a gas and at least one of the above-mentioned solvents are incorporated, or an atmosphere of any one of air, inert gas, heated air, heated inert gas, steam, ammonia gas, hydrocarbon gas, and organic silicon compound gas, thereby making it possible to control the solidification of the spun fiber in the spinning cylinder.

### Third step

In the third step, the spun fiber yielded in the second step is preliminarily heated with or without a tension in an oxidizing atmosphere to make the spun fiber cured. The third step is performed to prevent the fiber from being fused or melted and further prevent adjacent pieces of the fiber from adhering to each other at the time of firing in the fourth step. The treating temperature and the treating period are varied depending on the composition, and are not particularly limited. In general, the treating temperature is from 50 to 400°C and the treating period is from several to 30 hours. The oxidizing atmosphere may contain a component for heightening the power for oxidizing the spun fiber, such as water, nitrogen oxide, or ozone. The partial pressure of oxygen may be intentionally changed. In accordance with the proportion of low molecular weight materials contained in the starting material, the softening temperature of the spun fiber may be lower than 50°C. In this case, the fiber may be beforehand subjected to treatment for promoting the oxidation of the fiber surface at a lower temperature than the above-mentioned treating temperature.

In the silica-based composite oxide fiber according to the invention, it appears that in the second and third steps, the bleeding-out of the low molecular weight compounds contained in the starting material into the fiber surface advances so that a base texture for a target gradient composition is formed.

### Fourth step

In the fourth step, the cured fiber yielded in the third step is fired with or without a tension at 500 to 1800°C in an oxidizing atmosphere, so as to produce a silica-based composite oxide fiber made of a composite oxide phase composed of an oxide phase made mainly of silica (first phase) and a metal oxide phase containing one or more metals other than silica (second phase) wherein the content by percentage of at least one of the metal elements of the metal oxides constituting the second phase increases with a gradient toward the surface of the fiber, and the metals that constitute the second phase are in the form of particles. The firing temperature in the fourth step produces an effect on the particle size of the metals constituting the second phase. In other words, as the firing temperature is made higher, the particle size of the metals constituting the second phase becomes larger. As described above, the size of the mesopores is controlled in accordance with the particle size of the metals constituting the second phase; thus, the firing temperature is selected in accordance with a target size of the mesopores. In the fourth step, organic material components contained in the cured fiber are basically oxidized; however, in accordance with selected conditions, the components may remain as carbon or carbides. Even in such a state, the cured fiber is used as it is as long as a target function is not to be damaged. If the target function is to be damaged, the fiber is subjected to a further oxidizing treatment. At this time, it is essential to select the treating temperature and the treating period that do not cause a problem against a target gradient composition and a target crystal structure.

### Fifth step

In the fifth step, the silica-based composite oxide fiber yielded in the fourth step is subjected to surface treatment, thereby removing silica near the surface to form mesopores in the fiber surface. The method for removing silica is not particularly limited, and may be any physical method or chemical method. Examples thereof include a method of evaporating silica at high temperature under reduced pressure, and a method of eluting out silica by use of an acid. The method is in particular preferably a method of immersing the silica-based composite oxide fiber yielded in the fourth step into a 2% by weight aqueous solution of hydrogen fluoride for about 10 minutes, or a 10% by weight aqueous solution of sodium hydroxide for about 12 hours, thereby removing silica.

### Sixth step

In accordance with usage, a catalyst fiber is produced by: preparing the silica-based composite oxide fiber yielded in the fifth step, which has a mesopore structure; and causing the following to be carried into the mesopore regions of this fiber: at least one metal selected from platinum (Pt), palladium (Pd), ruthenium (Ru), rhodium (Rh), gold (Au), silver (Ag), copper (Cu), iron (Fe), nickel (Ni), zinc (Zn), gallium (Ga), germanium (Ge), indium (In) and tin (Sn). The method for causing the metal to be carried thereinto is not particularly limited. While a liquid containing metal ions of the above-mentioned metal is brought into contact with the silica-based composite oxide fiber, the fiber is irradiated with light having an energy equal to or more than the energy corresponding to the band gap of the metal oxide constituting the second phase. This makes it possible to cause metal particles, which have undergone the reduction, to be carried onto reduction sites of the metal oxide (non-light-radiated surface, that is, the insides of the mesopores). When the second phase is, for example, anatase type titania, the band gap thereof is 3.2 eV. Therefore, by irradiating the titania with light having an energy corresponding thereto, that is, having a wavelength of 387 nm or less, the metal particles can be carried into the mesopores structured by pores in particles of the titania.

### Examples

The following will describe the silica-based composite oxide fiber according to the invention, and a catalyst fiber containing this fiber in more detail by way of examples. However, the invention is not limited to the examples. In the state that the examples are varied, the examples may be carried out as long as the varied examples do not depart from the subject matter of the invention.

### (Reference Example 1: Production of a polycarbosilane)

Into a three-necked flask of 5 L volume were charged 2.5 L of anhydrous toluene and 400 g of metallic sodium, and then the system was heated up to the boiling point of toluene in the gas flow of nitrogen gas. 1 L of dimethyldichlorosilane was added thereto dropwise over one hour. After the end of the addition, the solution was heated and refluxed for 10 hours to produce a precipitation. This precipitation was filtrated, and washed with methanol and water in turn to yield 420 g of white powder of a polydimethylsilane. Into a three-necked flask equipped with a water-cooling condenser was charged 250 g of the resultant polydimethylsilane, and then the silane was heated to be caused to react at 420°C for 30 hours in the flow of nitrogen gas to yield a polycarbosilane having a number-average molecular weight of 1200.

### (Experiment Example 1)

To 50 g of the polycarbosilane synthesized by the process of Reference Example 1 were added 100 g of toluene and 50 g of tetrabutoxytitanium, and the solution was preliminarily heated at 100°C for 1 hour. Thereafter, the temperature thereof was gently raised to 150°C to distill off toluene, and continuously the reactive components were caused to react with each other for 5 hours. Thereafter, the temperature was further raised to 250°C to cause the reactive components to react with each other for 5 hours to synthesize a modified polycarbosilane. In order to cause this modified polycarbosilane and a low molecular weight organometallic compound to coexist intentionally, 5 g of tetrabutoxytitanium was added to the modified polycarbosilane so as to yield a mixture of the modified polycarbosilane and the low molecular weight organometallic compound.

The resultant mixture of the modified polycarbosilane and the low molecular weight organometallic compound was dissolved into toluene, and then the solution was charged into a spinning machine made of glass. The inside thereof was sufficiently purged with nitrogen, and then the temperature was raised to distill off toluene. The mixture was then melt-spun at 180°C. The resultant spun fibers were stepwise heated to 150°C in air to be made cured. Thereafter, the fibers were fired at temperatures of 900 to 1300°C, respectively, in air for 1 hour to yield titania/silica fibers. The fibers were immersed in a 2% by weight aqueous solution of hydrogen fluoride for 10 minutes to remove silica on the fiber surfaces, thereby yielding titania/silica fibers (average particle diameter: 10 µm) each having a mesopore structure. FIG. 2 shows a TEM (transmission electron microscope) photo of the mesopore-structure titania/silica fiber at the firing temperature of 1200°C in Experiment Example 1.

Out of the titania/silica fibers yielded in Experiment Example 1, a fiber yielded under any one of the firing conditions was composed of amorphous silica and anatase titania according to X-ray diffraction results thereof. Moreover, fluorescent X-ray analysis results thereof demonstrated that the proportion by weight of the silica was 78% by weight and that of the titania was 22% by weight. Furthermore, the distribution state of constituting atoms therein was measured by means of an EPMA (X-ray micro-analyzer). As a result, in the region from the outermost of the fiber to a depth of 1 µm, the ratio by mole of Ti/Si was from 0.90 to 0.94; in the region having a depth of 3 to 4 µm from the outermost, the ratio was from 0.12 to 0.15; and in the central region, the ratio was from 0.03 to 0.04. Thus, it was verified that the fibers had a gradient composition wherein the content by percentage of titanium increased toward the fiber surface.

Table 1 shows results obtained by measuring the tensile strength, the titania particle size, the BET specific surface area and the average pore diameter of each of the titania/silica fibers yielded in Experiment Example 1. The particle sizes of the titania were each measured from TEM observation thereof. The average pore diameters were each calculated from a nitrogen adsorption isothermal curve obtained by measurement at the temperature of liquid nitrogen, and analysis based on the BJH method. The tensile strengths, which were different from each other depending on the firing temperatures, were each as high as 1.8 GPa or more. As shown in Table 1, the average pore diameters were each in the range of 1 to 50 nm. The average pore diameters were large in proportion to the particle size of the titania, and could be controlled into the range of 1 to 50 nm in accordance with the firing temperature.

**[Table 1]**

| Firing temperature (degrees C) | Titania particle size (nm) | BET specific surface area (m²/g) | Average pore diameter (nm) | Tensile strength (Gpa) |
|---|---|---|---|---|
| 900 | 2 | 25 | 1 | 1.9 |
| 950 | 5 | 22 | 5 | 2.0 |
| 1000 | 7 | 15 | 8 | 2.0 |
| 1200 | 8 | 12 | 9 | 2.4 |
| 1225 | 10 | 10 | 10 | 2.3 |
| 1250 | 15 | 8 | 20 | 2.2 |
| 1275 | 25 | 6 | 30 | 1.9 |
| 1300 | 35 | 5 | 50 | 1.8 |

### (Experiment Example 2)

To 50 g of the polycarbosilane synthesized by the process of Reference Example 1 were added 100 g of toluene and 50 g of tetrabutoxyzirconium, and the solution was preliminarily heated at 100°C for 1 hour. Thereafter, the temperature thereof was gently raised to 150°C to distill off toluene, and continuously the reactive components were caused to react with each other for 5 hours. Thereafter, the temperature was further raised to 250°C to cause the reactive components to react with each other for 5 hours to synthesize a modified polycarbosilane. In order to cause this modified polycarbosilane and a low molecular weight organometallic compound to coexist intentionally, 5 g of tetrabutoxyzirconium was added to the modified polycarbosilane so as to yield a mixture of the modified polycarbosilane and the low molecular weight organometallic compound.

The resultant mixture of the modified polycarbosilane and the low molecular weight organometallic compound was dissolved into toluene, and then the solution was charged into a spinning machine made of glass. The inside of the machine was sufficiently purged with nitrogen, and then the temperature was raised to distill off toluene. The mixture was then melt-spun at 180°C. The resultant spun fibers were stepwise heated to 150°C in air to be made cured. Thereafter, the fibers were fired at temperatures of 1000 to 1350°C in air for 1 hour to yield zirconia/silica fibers. The fibers were immersed in a 10% by weight aqueous solution of sodium hydroxide for 12 hours to remove silica on the fiber surfaces, thereby yielding zirconia/silica fibers (average particle diameter: 10 µm) each having a mesopore structure.

Out of the zirconia/silica fibers according to Experiment Example 2, a fiber yielded under any one of the firing conditions was composed of amorphous silica and cubic zirconia according to X-ray diffraction results thereof. Moreover, fluorescent X-ray analysis results thereof demonstrated that the proportion by weight of the silica was 76% by weight and that of the zirconia was 24% by weight. Furthermore, the distribution state of constituting atoms therein was examined by means of the EPMA. As a result, about a fiber yielded under any one of the firing conditions out of the resultant fibers, in the region from the outermost of the fiber to a depth of 1 µm, the ratio by mole of Zr/Si was from 0.90 to 0.95; in the region having a depth of 3 to 4 µm from the outermost, the ratio was from 0.14 to 0.16; and in the central region, the ratio was from 0.03 to 0.04. Thus, it was verified that the fibers had a gradient composition wherein the content by percentage of zirconium increased toward the fiber surface.

In the same way as in Experiment Example 1, the tensile strength, the zirconia particle size, the BET specific surface area and the average pore diameter of each of the zirconia/silica fibers yielded in Experiment Example 2 were measured. The results are shown in Table 2. The tensile strengths, which were different from each other depending on the firing temperatures, were each as high as 2.0 GPa or more. As shown in Table 2, the average pore diameters were each dispersed in the range of 1 to 50 nm. The average pore diameters were large in proportion to the particle size of the zirconias, and could be controlled into the range of 1 to 50 nm in accordance with the firing temperature.

**[Table 2]**

| Firing temperature (degrees C) | Titania particle size (nm) | BET specific surface area (m²/g) | Average pore diameter (nm) | Tensile strength (Gpa) |
|---|---|---|---|---|
| 1000 | 2 | 65 | 1 | 2.1 |
| 1100 | 3 | 46 | 2 | 2.2 |
| 1150 | 4 | 38 | 4 | 2.3 |
| 1200 | 5 | 30 | 8 | 2.6 |
| 1250 | 7 | 26 | 10 | 2.6 |
| 1275 | 8 | 22 | 15 | 2.5 |
| 1300 | 16 | 20 | 22 | 2.3 |
| 1325 | 20 | 18 | 35 | 2.1 |
| 1350 | 28 | 15 | 50 | 2.1 |

### (Example 1)

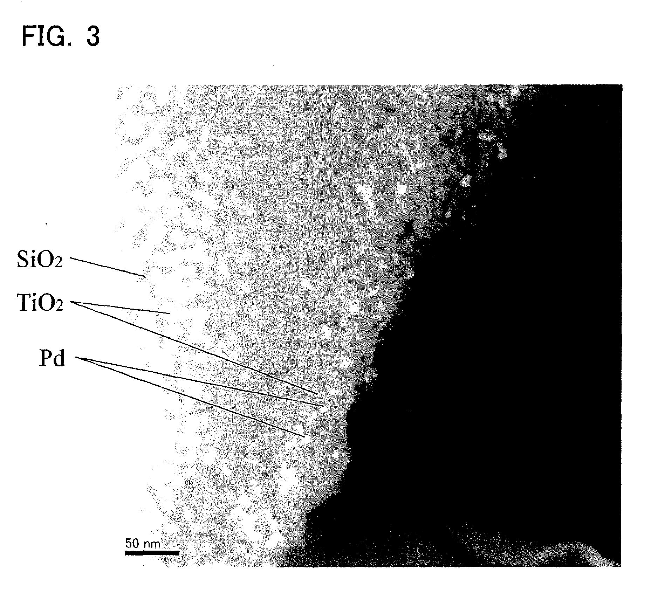

The titania/silica fiber according to Experiment Example 1 produced at the firing temperature of 1200°C was put into a glass laboratory dish 100 mm in diameter, and then immersed into an aqueous solution of palladium (II) sodium chloride trihydrate (palladium concentration: 30 ppm). The resultant was irradiated with ultraviolet rays having a central wavelength of 185 nm at an intensity of 2 mW/cm² for 3 hours. After the irradiation, the fiber was taken out from the dish, washed with water, and dried to yield a palladium-carried titania/silica fiber according to Example 1. The amount of carried palladium was 0.3% by weight from results of the weight measurement. From the TEM observation results thereof, it was understood that the carried palladium was present only in the mesopores in the titania/silica fiber surface as shown in FIG. 3. In order to examine the sintering resistance of the carried palladium catalyst, the palladium-carried titania/silica fiber was subjected to heat treatment at 300°C in a reducing atmosphere (H₂: 40%, and Ar: 60%) for 2 hours, and a change in the size of the palladium particles was examined. Before the heat treatment, the particle size was 3 nm. After the heat treatment also, the size of the palladium particles in the mesopores, which had not been changed at all, was 3 nm. Thus, it was verified that the catalyst was excellent in sintering resistance.

About the palladium-carried titania/silica fiber according to Example 1, the conversion based on Heck reaction, which is frequently used to evaluate the performance of palladium catalysts, was measured. Into a round bottom flask of 100 mL volume were added bromobenzene (54.11 mol), styrene (7.53 mol), sodium acetate (6.07 mol), and N-methylpyrrolidone (5 mL), and to this mixture was then put the palladium-carried titania/silica fiber according to Example 3 in the form of a nonwoven cloth 20 mm square. The reactive components were then caused to react with each other in an oil bath of 140°C under the atmosphere of argon for 3 hours. By gas chromatographic analysis of the reactants, the conversion was calculated. Furthermore, by ICP (inductively coupled plasma) analysis, the amount of eluted-out palladium was obtained. As a result, it was made evident that the conversion was as high as 99% and the eluted-out palladium amount was less than 10 ppm.

### (Example 2)

The zirconia/silica fiber according to Experiment Example 2 produced at the firing temperature of 1200°C was put into a glass laboratory dish 100 mm in diameter, and then immersed into an aqueous solution of palladium (II) sodium chloride trihydrate (palladium concentration: 30 ppm). The resultant was irradiated with ultraviolet rays having a central wavelength of 185 nm at an intensity of 2 mW/cm² for 3 hours. After the irradiation, the fiber was taken out from the dish, washed with water, and dried to yield a palladium-carried zirconia/silica fiber according to Example 2. The amount of carried palladium was 0.3% by weight from results of the weight measurement. From the TEM observation results thereof, it was understood that the carried palladium was present only in the mesopores in the zirconia/silica fiber surface as illustrated schematically in FIG. 1. In order to examine the sintering resistance of the carried palladium catalyst, the palladium-carried zirconia/silica fiber was subjected to heat treatment at 300°C in a reducing atmosphere (H₂: 40%, and Ar: 60%) for 2 hours, and a change in the size of the palladium particles was examined. Before the heat treatment, the particle size was 3 nm. After the heat treatment also, the size of the palladium particles in the mesopores, which had not been changed at all, was 3 nm. Thus, it was verified that the catalyst was excellent in sintering resistance.

### (Comparative Example 1)

According to the method described in Example 1 of Patent Document 1, fibrous porous silica particles were produced. The method was as follows: a commercially available JIS No. 3 sodium silicate (SiO₂: 23.6%, Na₂O: 7.59%) diluted by the addition of water was added to a solution in which a triblock copolymer (trade name: "Pluronic P123" available from Aldrich, PEO₂₀PPO₇₀PEO₂₀, average molecular weight: 5800) was dissolved in 2-N hydrochloric acid while the copolymer solution was stirred. The two starting solutions were mixed with each other in the state that the temperatures of the solutions were beforehand adjusted to 35°C. After 1 hour from the time when the two solutions were mixed with each other, NaF was added thereto, and then the reactive components were caused to react with each other for 6 hours. The ratio by mole of SiO₂/triblock copolymer/Na₂O/HCl/H₂O in the mixed solution was 1/0.0169/0.312/5.88/202. The ratio by mole of NaF was from 0.12 to 2.33. The H₂O contained water originating from all the raw materials. After the reaction, a solid product was separated by filtration, washed, and then sufficiently dried at 50°C. Furthermore, the product was fired in an electric furnace at 600°C for 1 hour to remove organic components. In this way, the fibrous porous silica particles were yielded.

About the resultant fibrous porous silica particles, the BET specific surface area and the average pore diameter were obtained. As a result, the area and the diameter were 1000 m²/g and 8 nm, respectively. The average pore diameter was calculated from a nitrogen adsorption isothermal curve obtained by measurement at the temperature of liquid nitrogen, and analysis based on the BJH method. The fibrous porous silica particles were immersed into an aqueous solution of palladium (II) sodium chloride trihydrate (palladium concentration: 30 ppm), and dried. The particles were then subjected to heat treatment at 500°C for 1 hour to cause palladium to be carried thereon. In this way, palladium-carried fibrous porous silica particles according to Comparative Example 1 were yielded. The amount of carried palladium was 0.3% by weight from results of the weight measurement. From the TEM observation results thereof, it was understood that the carried palladium was present on both of the inside of the mesopores and the particle surfaces. In order to examine the sintering resistance of the carried palladium catalyst, the palladium-carried fibrous porous silica particles were subjected to heat treatment at 300°C in a reducing atmosphere (H₂: 40%, and Ar: 60%) for 2 hours, and a change in the size of the palladium particles was examined. Before the heat treatment, the particle size was 3 nm. However, after the heat treatment, the palladium particles on the particle surfaces grew up to a size of about 20 nm. Thus, it was made evident that the sintering resistance was poor.

### (Comparative Example 2)

According to the method described in Patent Document 3, a palladium-carried silica fiber according to Comparative Example 2 was produced. The method is as follows: to 1000 g of commercially available boehmite powder were added 1000 g of water and 35 g of nitric acid. A double arm kneader was used to prepare a dough which was to be a shaped-body precursor. Next, a screw-type shaping machine was used to yield a cylindrical carrier precursor having a diameter of about 1 mm and a length of about 3 mm. The resultant carrier precursor was dried at 130°C for 8 hours. Dry air was then caused to flow into a rotary firing machine at 4 dm³min⁻¹ and the precursor was fired therein at 600°C. In this way, a carrier was yielded. An aqueous solution of palladium (II) sodium chloride trihydrate (palladium concentration: 30 ppm) was sprayed onto this carrier, so that the carrier was impregnated therewith. The resultant was dried at 130°C for 8 hours. Dry air was then caused to flow thereinto at 8 dm³min⁻¹ and the carrier was fired therein at 500°C for 30 minutes. In this way, a palladium-carried silica fiber according to Comparative Example 2 was yielded.

About the palladium-carried silica fiber according to Comparative Example 2, the conversion based on Heck reaction, which is frequently used to evaluate the performance of palladium catalysts, was measured. Into a round bottom flask of 100 mL volume were added bromobenzene (54.11 mol), styrene (7.53 mol), sodium acetate (6.07 mol), and N-methylpyrrolidone (5 mL), and to this mixture was then put the palladium-carried silica fiber according to Comparative Example 2 as a catalyst, which was 3 mm in diameter and had been charged into a stainless-steel net-basket 20 mm square. The reactive components were then caused to react with each other in an oil bath of 140°C under the atmosphere of argon for 3 hours. By gas chromatographic analysis of the reactants, the conversion was calculated. Furthermore, by ICP analysis, the amount of eluted-out palladium was obtained. As a result, it was made evident that the conversion was as low as 72% and the eluted-out palladium amount was 2%, which was larger than in Example 1. This seems to be because in Comparative Example 2, palladium was present in a large amount also on the silica surface and the palladium on the surface eluted out in the reaction.

## Claims

1. A silica-based composite oxide fiber, comprising a composite oxide phase composed of an oxide phase made mainly of a silica component (first phase) and a metal oxide phase comprising one or more metals other than silica (second phase),
wherein a content by percentage of at least one of metal elements of metal oxides constituting the metal oxide phase (second phase) increases with a gradient toward a surface of the fiber, the metals that constitute the metal oxide phase (second phase) are in the form of particles, and mesopores extending from the fiber surface to the inside of the fiber and having an average pore diameter of 2 to 30 nm are formed between the particles.

2. The silica-based composite oxide fiber according to claim 1, wherein the content by percentage of the oxide phase (first phase) in the whole of the fiber is from 98 to 40% by weight, and the content by percentage of the metal oxide phase (second phase) is from 2 to 60% by weight.

3. The silica-based composite oxide fiber according to claim 1 or 2, wherein the gradient of the content by percentage of at least one of the metal elements of the metal oxides constituting the metal oxide phase (second phase) is present from the fiber surface to a depth of 500 nm.

4. The silica-based composite oxide fiber according to any one of claims 1 to 3, wherein a crystal particle diameter of the metal oxides constituting the metal oxide phase (second phase) is 30 nm or less.

5. The silica-based composite oxide fiber according to any one of claims 1 to 4, wherein the metal oxides constituting the metal oxide phase (second phase) are one or more oxides or one or more composite oxides selected from titanium (Ti), vanadium (V), chromium (Cr), manganese (Mn), cobalt (Co), copper (Cu), zinc (Zn), barium (Ba), strontium (Sr), cadmium (Cd), lead (Pb), iron (Fe), nickel (Ni), aluminum (Al), gallium (Ga), germanium (Ge), indium (In), tin (Sn), zirconium (Zr), and tungsten (W).

6. A catalyst fiber comprising: the silica-based composite oxide fiber according to any one of claims 1 to 5; and at least one metal selected from platinum (Pt), palladium (Pd), ruthenium (Ru), rhodium (Rh), gold (Au), silver (Ag), copper (Cu), iron (Fe), nickel (Ni), zinc (Zn), gallium (Ga), germanium (Ge), indium (In) and tin (Sn) and carried in pores in the silica-based composite oxide fiber.

7. A process for producing a silica-based composite oxide fiber, comprising:
a first step of melting a modified polycarbosilane having a structure in which a polycarbosilane having a number-average molecular weight of 200 to 10,000 and having a main chain skeleton mainly represented by the following general formula [1] is modified with an organometallic compound: 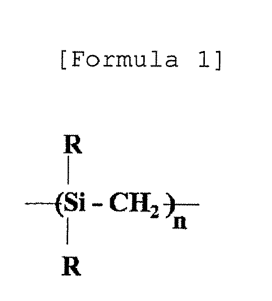
wherein R is a hydrogen atom, a lower alkyl group, or a phenyl group,
or melting a mixture of the modified polycarbosilane and an organometallic compound, thereby yielding a dope;
a second step of yielding a spun fiber from the dope;
a third step of subjecting the spun fiber to heat treatment in an oxidizing atmosphere, thereby yielding an cured fiber;
a fourth step of firing the cured fiber in an oxidizing atmosphere, thereby yielding a silica-based composite oxide fiber; and
a fifth step of subjecting the silica-based composite oxide fiber to surface treatment, thereby removing silica near a surface of the fiber.

8. A process for producing a catalyst fiber, comprising:
a first step of melting a modified polycarbosilane having a structure in which a polycarbosilane having a number-average molecular weight of 200 to 10,000 and having a main chain skeleton mainly represented by the following general formula [2] is modified with an organometallic compound: 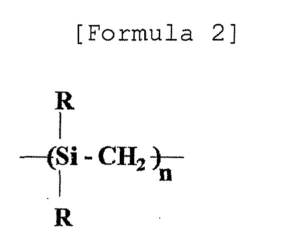
wherein R is a hydrogen atom, a lower alkyl group, or a phenyl group,
or melting a mixture of the modified polycarbosilane and an organometallic compound, thereby yielding a dope;
a second step of yielding a spun fiber from the dope;
a third step of subjecting the spun fiber to heat treatment in an oxidizing atmosphere, thereby yielding an cured fiber;
a fourth step of firing the cured fiber in an oxidizing atmosphere, thereby yielding a silica-based composite oxide fiber;
a fifth step of subjecting the silica-based composite oxide fiber to surface treatment, thereby removing silica near a surface of the fiber; and
a sixth step of causing at least one metal selected from platinum (Pt), palladium (Pd), ruthenium (Ru), rhodium (Rh), gold (Au), silver (Ag), copper (Cu), iron (Fe), nickel (Ni), zinc (Zn), gallium (Ga), germanium (Ge), indium (In) and tin (Sn) to be carried onto the silica-based composite oxide fiber.

9. The process for producing a catalyst fiber according to claim 8, wherein in the sixth step, the silica-based composite oxide fiber is brought into contact with a solution containing the metal while light is radiated thereto, thereby causing the metal to be carried into pores in the surface of the fiber.
